# DEMANDE DE BREVET EUROPEEN

(11) **EP 1 426 730 A2**
(43) Date de publication de la demande: **09.06.2004**
(21) Numéro de dépôt: 03292854.1
(22) Date de dépôt: 17.11.2003
(51) Int. Cl.: G01B 9/06

(54) **Dispositif de mesure de position relative d'objets emetteurs d'ondes electromagnetiques**

(30) Priorité: 06.12.2002 FR 0215431
(71) Demandeur: ALCATEL, 75008 Paris (FR)
(72) Inventeur: Cerutti-Maori, Guy Henri Abel, 06150 Cannes La Bocca (FR)
(74) Mandataire: Smith, Bradford Lee

(57) **Abrégé**

L'invention concerne un dispositif de mesure de position relative d'objets émetteurs d'ondes électromagnétiques. Le dispositif comprend au moins deux télescopes afocaux (1, 2), un combineur (3) et un télescope de focalisation (4).

Un premier télescope afocal (1) recueille, selon une première direction, une onde électromagnétique provenant d'au moins un premier objet (E1) émetteur d'ondes électromagnétiques et un deuxième télescope afocal (2) recueille, selon une deuxième direction, une onde électromagnétique provenant d'au moins un deuxième objet (E2) émetteur d'ondes électromagnétiques. Les ondes recueillies par les télescopes afocaux (1, 2) sont transmises, via le combineur (3), vers le télescope de focalisation (4) de façon à former des images (I1, I2) du premier et du deuxième objets dans le plan de focalisation (P) du télescope de focalisation (4).

## Description

### Domaine technique et art antérieur

L'invention concerne un dispositif de mesure de position relative d'objets émetteurs d'ondes électromagnétiques ainsi qu'un satellite astrométrique comprenant un dispositif de mesure selon l'invention.

Selon le mode de réalisation préférentiel de l'invention, les objets émetteurs d'ondes électromagnétiques sont des étoiles qui émettent des ondes lumineuses.

Plusieurs dispositifs de mesure de position relative d'étoiles sont connus de l'art antérieur.

Un des premiers dispositifs, conçu dans les années 1960, propose le montage d'un combineur spatial devant un télescope astronomique. Le combineur est constitué d'un assemblage très stable de deux miroirs permettant de viser deux directions du ciel avec le même télescope. Chaque direction utilise une demi-pupille du télescope. L'angle A entre les deux directions peut varier de 60° à 120°. Par comparaison et filtrage des positions relatives de couples d'étoiles mesurées au cours d'un balayage de la voûte céleste, il est alors possible de remonter à la position relative des étoiles avec une très bonne précision.

Un dispositif spatial de mesure de position relative des étoiles, conçu au milieu des années 1980 et basé sur le principe du dispositif mentionné ci-dessus, a permis d'obtenir un catalogue de mesures qui est le plus précis à ce jour (catalogue Hipparcos). La précision est de l'ordre de la milliarc-seconde ou mas pour « milli arc second ». La combinaison optique utilisée comprend un télescope de Schmidt utilisant une lame par réflexion. Compte tenu de l'encombrement réduit disponible, la lame est coupée en deux et les deux morceaux sont collés de façon à réaliser un combineur spatial.

A l'heure actuelle, l'Agence Spatiale Européenne envisage, avec la mission GAIA, d'obtenir une précision de l'ordre de 10 microarc-seconde pour des étoiles de magnitudes inférieures à 15. Pour obtenir une telle précision, les technologies disponibles actuellement nécessitent d'utiliser un télescope de focale voisine de 50 mètres et une surface de demi-pupille de l'ordre du mètre carré. Un télescope de Schmidt ne peut alors plus être retenu car son encombrement est égal au double de sa focale. Un télescope de Cassegrain présente, pour sa part, des aberrations inacceptables. De plus, la dimension du combineur spatial dans l'espace demande l'utilisation de deux miroirs plans de grandes dimensions et de même taille que la pupille d'entrée.

Un dispositif proposé pour atteindre la précision souhaitée par la mission GAIA est d'utiliser un télescope de Korsch comprenant un miroir primaire, un miroir secondaire et un miroir tertiaire associé à un miroir plan placé dans la pupille de sortie du télescope. Dans un tel dispositif, deux faisceaux optiques hors axes avec un faible champ utilisent des parties sans recouvrement des quatre miroirs mentionnés ci-dessus et se focalisent en un même point. En coupant en deux ces quatre miroirs, on obtient alors deux télescopes hors-axes identiques qu'il faut aligner de façon que les faisceaux fassent un angle A, la recombinaison des faisceaux se faisant au niveau de la pupille de sortie du dispositif où le combineur est placé. Compte tenu des problèmes d'encombrement, il est en général nécessaire d'introduire des miroirs plans complémentaires entre la pupille de sortie et le plan focal afin de replier les faisceaux optiques.

Cette architecture optique est très complexe et il n'est pas facile d'en assurer la stabilité. Il faut noter également que le télescope de Korsch présente de la distorsion et que les aberrations ne donnent pas une tache de diffraction uniforme dans le champ. De plus, l'incidence des faisceaux sur les détecteurs du plan focal peut devenir importante en bord de champ.

L'invention ne présente pas ces inconvénients.

### Exposé de l'invention

En effet, l'invention concerne un dispositif de mesure de position relative d'objets émetteurs d'ondes électromagnétiques comprenant un dispositif de formation d'images des objets émetteurs d'ondes électromagnétiques. Le dispositif de formation d'images comprend au moins deux télescopes afocaux, un combineur et un télescope de focalisation, un premier télescope afocal recueillant, selon une première direction, une onde électromagnétique provenant d'au moins un premier objet émetteur d'ondes électromagnétiques et au moins un deuxième télescope afocal recueillant, selon une deuxième direction, une onde électromagnétique provenant d'au moins un deuxième objet émetteur d'ondes électromagnétiques, les ondes électromagnétiques recueillies par les premier et deuxième télescopes afocaux étant transmises, via le combineur, vers le télescope de focalisation de façon à former une image du premier objet et une image du deuxième objet dans le plan de focalisation du télescope de focalisation.

Selon une caractéristique supplémentaire de l'invention, le combineur est placé dans les pupilles de sortie des télescopes afocaux.

Selon encore une caractéristique supplémentaire de l'invention, le combineur est placé dans la pupille d'entrée du télescope de focalisation.

Selon encore une caractéristique supplémentaire de l'invention, les pupilles de sortie des télescopes afocaux sont confondus avec la pupille d'entrée du télescope de focalisation.

Selon encore une caractéristique supplémentaire de l'invention, le combineur est constitué de deux miroirs plans.

Selon encore une caractéristique supplémentaire de l'invention, le combineur est constitué de deux miroirs déformés pour corriger des aberrations résiduelles des télescopes afocaux et/ou du télescope de focalisation.

Selon encore une caractéristique supplémentaire de l'invention, au moins un télescope afocal est constitué de deux miroirs paraboliques concaves et d'un diagramme de champ, les deux miroirs paraboliques ayant un foyer commun, le diaphragme de champ et la pupille de sortie réelle du télescope afocal étant situés dans le foyer commun.

Selon encore une caractéristique supplémentaire de l'invention, le télescope afocal comprend un premier miroir concave associé à un miroir convexe pour corriger la courbure de champ et un second miroir concave.

Selon encore une caractéristique supplémentaire de l'invention, le télescope de focalisation est un télescope de Schmidt par réflexion.

Selon encore une caractéristique supplémentaire de l'invention, le télescope de focalisation est un télescope de Bowers-Schmidt.

Selon encore une caractéristique supplémentaire de l'invention, le télescope de focalisation est un télescope TMA.

Selon encore une caractéristique supplémentaire de l'invention, les télescopes afocaux ont des champs différents.

L'invention concerne également un satellite astrométrique comprenant un dispositif de mesure de position relative d'objets émetteurs d'ondes électromagnétiques selon l'invention.

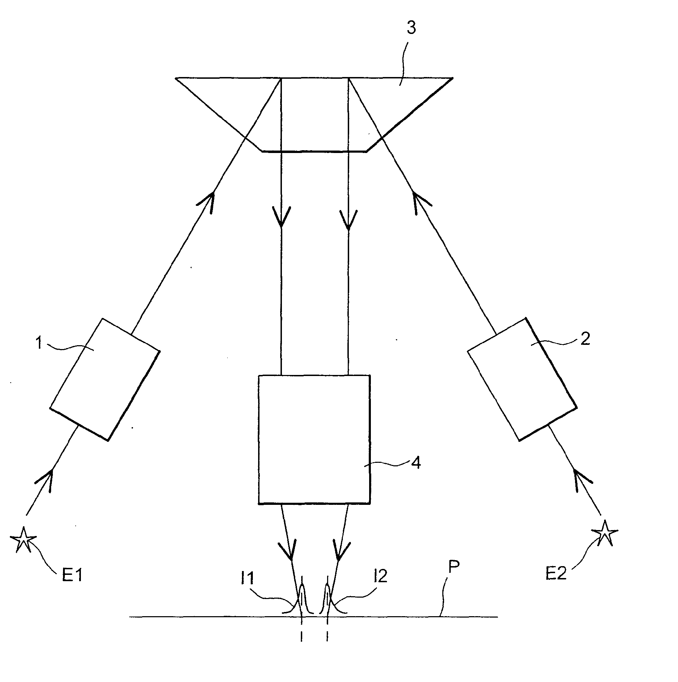

D'autres caractéristiques et avantages de l'invention apparaîtront à la lecture d'un mode de réalisation préférentiel fait en référence à la figure jointe.

### Description détaillée d'un mode de réalisation préférentiel de l'invention

La figure jointe représente un exemple de dispositif de formation d'images d'objets émetteurs d'ondes électromagnétiques selon l'invention.

Le dispositif comprend deux télescopes afocaux 1 et 2, un combineur 3 et un télescope de focalisation 4. Une étoile E1 envoie une onde lumineuse vers le télescope afocal 1 et une étoile E2 envoie une onde lumineuse vers le télescope afocal 2. Les faisceaux lumineux issus des télescopes afocaux 1 et 2 sont transmis, via le combineur 3, vers le télescope de focalisation 4. A cette fin, le combineur 3 réfléchit les deux faisceaux qu'il reçoit et renvoie vers le télescope de focalisation 4 deux faisceaux lumineux sensiblement parallèles. Des images I1 et I2 des étoiles respectives E1 et E2 se forment dans le plan focal du télescope de focalisation.

Chaque télescope afocal est constitué, de préférence, de deux miroirs paraboliques concaves et d'un diaphragme de champ, les deux miroirs paraboliques ayant un foyer commun, le diaphragme de champ et la pupille de sortie du télescope afocal étant situés dans le foyer commun. Les champs des télescopes afocaux peuvent être différents si, par exemple, il est souhaité d'identifier la provenance des étoiles. Une variante du télescope afocal consiste à remplacer le premier miroir parabolique par un télescope de Cassegrain, c'est-à-dire un miroir parabolique associé à un miroir hyperbolique, s'il est souhaité de corriger la courbure de champ.

Le combineur est constitué, par exemple, de deux miroirs plans. Avantageusement, il est également possible de corriger des aberrations résiduelles des télescopes afocaux et/ou du télescope de focalisation en utilisant deux miroirs déformés.

Selon une variante de l'invention, le combineur 3 est placé dans les pupilles de sortie des télescopes afocaux. Selon une deuxième variante de l'invention, le combineur 3 est placé dans la pupille d'entrée du télescope de focalisation. Selon encore une autre variante de l'invention, les pupilles de sorties des télescopes afocaux sont préférentiellement confondues avec la pupille d'entrée du télescope de focalisation.

Le télescope de focalisation est préférentiellement un télescope de Schmidt par réflexion. Selon une première variante, le télescope de focalisation est un télescope de Bowers-Schmidt constitué de deux miroirs sphériques concentriques associés à une lame de Schmidt par réflexion qui présente un encombrement moitié du précédent et une surface focale concave. Télescope de Schmidt et télescope de Bowers-Schmidt génèrent une incidence sur le plan focal constante dans le champ. Selon une deuxième variante, le télescope de focalisation est un télescope TMA (TMA pour « Three Mirror Anastigmat) avec pupille en avant et, préférentiellement, en configuration télécentrique.

Quelle que soit la variante de l'invention, le dispositif de combinaison optique présente de nombreux avantages par rapport aux dispositifs de combinaison optique de l'art antérieur.

Du fait de l'association d'éléments optiques distincts (télescopes afocaux, combineur, télescope de focalisation), il est possible, par exemple, d'avoir un plus grand nombre de paramètres permettant d'optimiser les performances d'ensemble du dispositif.

De même, les différentes variantes pour réaliser les télescopes afocaux et/ou le télescope de focalisation (cf. ci-dessus) permettent de s'adapter facilement aux différents besoins tels que, par exemple, une absence de distorsion, une obtention de tâche image identique dans le champ, une défocalisation n'introduisant pas de parallaxe, etc.

Par ailleurs, le grossissement des télescopes afocaux permet de réduire la distance focale du télescope de focalisation et d'utiliser tout le champ potentiel du télescope de focalisation. Il est possible, également, de tolérer un mouvement de translation et/ou de rotation de l'un ou de plusieurs des éléments qui constituent le dispositif (télescope de focalisation, télescopes afocaux, combineur) sans entraîner d'erreur de mesure.

Selon l'exemple représenté sur la figure, le dispositif de formation d'image comprend deux télescopes afocaux, chaque télescope afocal recevant des ondes lumineuses provenant d'une seule étoile. De façon plus générale, le télescope afocal 1 reçoit des ondes lumineuses provenant de N étoiles distinctes et le télescope afocal 2 reçoit des ondes lumineuses provenant de M étoiles distinctes. Le dispositif de mesure selon l'invention permet alors de déterminer la position relative de chacune des N étoiles dont les ondes sont reçues par le télescope afocal 1 avec chacune des M étoiles dont les ondes sont reçues par le télescope afocal 2. Ce n'est que pour des raisons de simplicité que seulement deux étoiles ont été représentées sur la figure. De même, l'exemple de dispositif de mesure représenté sur la figure ne comprend que deux télescopes afocaux. De façon plus générale, l'invention concerne un dispositif de mesure comprenant au moins deux télescopes afocaux.

## Revendications

1. Dispositif de mesure de position relative d'objets émetteurs d'ondes électromagnétiques comprenant un dispositif de formation d'images des objets émetteurs d'ondes électromagnétiques, **caractérisé en ce que** le dispositif de formation d'images comprend au moins deux télescopes afocaux (1, 2), un combineur (3) et un télescope de focalisation (4), un premier télescope afocal (1) recueillant, selon une première direction, une onde électromagnétique provenant d'au moins un premier objet (E1) émetteur d'ondes électromagnétiques et un deuxième télescope afocal (2) recueillant, selon une deuxième direction, une onde électromagnétique provenant d'au moins un deuxième objet (E2) émetteur d'ondes électromagnétiques, les ondes électromagnétiques recueillies par les premier et deuxième télescopes afocaux (1, 2) étant transmises, via le combineur (3), vers le télescope de focalisation (4) de façon à former une image (I1) du premier objet (E1) et une image (I2) du deuxième objet (E2) dans le plan de focalisation (P) du télescope de focalisation (4).

2. Dispositif selon la revendication 1, **caractérisé en ce que** le combineur (3) est placé dans les pupilles de sortie des télescopes afocaux (1, 2).

3. Dispositif selon la revendication 1, **caractérisé en ce que** le combineur (3) est placé dans la pupille d'entrée du télescope de focalisation (4).

4. Dispositif selon la revendication 3, **caractérisé en ce que** les pupilles de sortie des télescopes afocaux (1, 2) sont confondus avec la pupille d'entrée du télescope de focalisation (4).

5. Dispositif selon l'une quelconque des revendications précédentes, **caractérisé en ce que** le combineur (3) est constitué de deux miroirs plans.

6. Dispositif selon l'une quelconque des revendications 1 à 4, **caractérisé en ce que** le combineur (3) est constitué de deux miroirs déformés pour corriger des aberrations résiduelles des télescopes afocaux (1, 2) et/ou du télescope de focalisation (4).

7. Dispositif selon l'une quelconque des revendications précédentes, **caractérisé en ce qu'**au moins un télescope afocal (1, 2) est constitué de deux miroirs paraboliques concaves et d'un diaphragme de champ, les deux miroirs paraboliques ayant un foyer commun, le diaphragme de champ et la pupille de sortie réelle du télescope afocal étant situés dans le foyer commun.

8. Dispositif selon l'une quelconque des revendications 1 à 6, **caractérisé en ce qu'**au moins un télescope afocal (1, 2) comprend un premier miroir concave associé à un miroir convexe pour corriger la courbure de champ et un second miroir concave.

9. Dispositif selon l'une quelconque des revendications précédentes, **caractérisé en ce que** le télescope de focalisation (4) est un télescope de Schmidt par réflexion.

10. Dispositif selon l'une quelconque des revendications 1 à 8, **caractérisé en ce que** le télescope de focalisation (4) est un télescope de Bowers-Schmidt.

11. Dispositif selon l'une quelconque des revendications 1 à 8, **caractérisé en ce que** le télescope de focalisation (4) est un télescope TMA.

12. Dispositif selon l'une quelconque des revendications précédentes, **caractérisé en ce que** les télescopes afocaux ont des champs différents.

13. Satellite astrométrique, **caractérisé en ce qu'**il comprend un dispositif de mesure de position relative d'objets émetteurs d'ondes électromagnétiques selon l'une quelconque des revendications précédentes.
